# EUROPEAN PATENT APPLICATION

(11) **EP 4 603 321 A1**
(43) Date of publication of application: **20.08.2025**
(21) Application number: 25151487.3
(22) Date of filing: 13.01.2025
(51) Int. Cl.: B60L 50/60, B60L 58/12, B60L 3/12, B60L 53/18, B60L 53/16

(54) **CHARGING DEVICE**

(30) Priority: 09.02.2024 JP 2024018717
(71) Applicant: TOYOTA JIDOSHA KABUSHIKI KAISHA, Aichi-ken, 471-8571 (JP)
(72) Inventor: KIDA, Masatoshi, Toyota-shi, 471-8571 (JP)
(74) Representative: Kuhnen & Wacker Patent- und Rechtsanwaltsbüro PartG mbB

(57) **Abstract**

A charging device (2) presents a time at which charging is finished when a battery (11) is charged with power supplied from a power supply (20). The charging device (2) includes a controller (4). The controller (4) acquires information on a charging target capacity of the battery (11). At predetermined intervals, the controller (4) (i) acquires information on a maximum output power value of the power supply (20) and information on a current capacity of the battery (11), (ii) calculates a charging end time at which the charging target capacity is reached from the maximum output power value and a difference between the charging target capacity and the current capacity, and (iii) outputs the charging end time.

## Description

### BACKGROUND OF THE INVENTION

### 1. Field of the Invention

The present disclosure relates to a charging device capable of presenting a charging end time at which charging of a battery is finished.

### 2. Description of Related Art

Japanese Unexamined Patent Application Publication No. 2014-233180 (JP 2014-233180 A) discloses a technique for periodically calculating a charging time needed to charge a battery with minimum power output from a power supply.

In a case where output of the power supply is larger than the minimum power, there is a concern that a difference between the calculated charging time and an actual charging time is large in the technique of JP 2014-233180 A.

### SUMMARY OF THE INVENTION

The present disclosure provides a charging device that calculates a time at which charging is finished with high accuracy when a battery is charged with electric power supplied from a power supply and present the time.

According to an aspect of the present disclosure, a charging device is configured to present a time at which charging is finished when a battery is charged with power supplied from a power supply. The charging device includes a controller. The controller is configured to acquire information on a charging target capacity of the battery. The controller is configured to, at predetermined intervals, (i) acquire information on a maximum output power value of the power supply and information on a current capacity of the battery, (ii) calculate a charging end time at which the charging target capacity is reached from the maximum output power value and a difference between the charging target capacity and the current capacity, and (iii) output the charging end time.

The controller may be configured to display the charging end time on a display device of a portable terminal.

The charging device calculates the charging end time based on the maximum output power value of the power supply. Therefore, the charging device can obtain the charging end time with high accuracy.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a battery electric vehicle including a charging device according to an example;
FIG. 2 is a flowchart of a charging process according to a first example;
FIG. 3 is a flowchart of a charging process according to a second example;
FIG. 4 is a flowchart of the charging process according to the second example (continuation of FIG. 3);
FIG. 5 is a flowchart of the charging process according to the second example (continuation of FIG. 4); and
FIG. 6 is a flowchart of the charging process according to the second example (continuation of FIG. 5).

### DETAILED DESCRIPTION OF EMBODIMENTS

### First Example

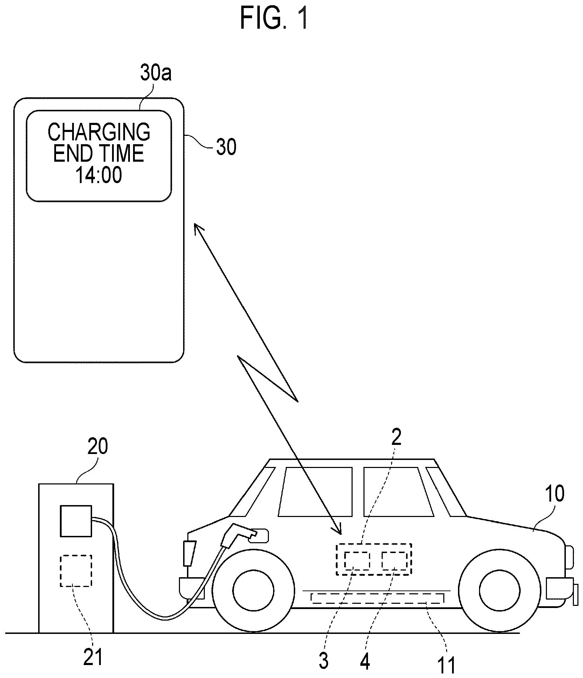

A charging device 2 according to a first example will be described with reference to the drawings. The charging device 2 is mounted on a battery electric vehicle 10. FIG. 1 shows a schematic diagram of the battery electric vehicle 10 including the charging device 2, and a power supply 20 of a charging stand. The power supply 20 of the charging stand means a power supply that is present outside the battery electric vehicle 10.

The battery electric vehicle 10 includes a battery 11. The battery 11 stores power to be supplied to an electric motor (not shown) that drives wheels. The battery 11 is charged with power supplied from the power supply 20 of the charging stand. FIG. 1 shows a state in which a power supply cable extending from the power supply 20 is connected to the battery electric vehicle 10. The charging device 2 is connected between the power supply 20 and the battery 11. The charging device 2 includes a voltage converter 3 that converts a voltage of the power supplied from the power supply 20 into a voltage suitable for charging the battery 11, and a controller 4. The controller 4 also serves as a controller that controls the entire vehicle, such as the battery 11 and the electric motor (not shown), in addition to controlling the charging.

The controller 4 of the charging device 2 can communicate with a controller 21 of the power supply 20 to obtain information on a maximum output power value of the power supply 20. A maximum current value that the power supply 20 can supply is obtained by dividing the maximum output power value by an output voltage of the power supply 20. In addition, the controller 4 of the charging device 2 acquires information on a current capacity of the battery 11. The controller 4 also acquires information on a charging target capacity of the battery 11. The controller 4 can communicate with a portable terminal 30 of a user. The user inputs the charging target capacity to the controller 4 of the charging device 2 via the portable terminal 30. Usually, the charging target capacity is set to a full charge capacity of the battery 11.

The controller 4 calculates a time (required charging time) needed for charging by a formula: "(charging target capacity - current capacity)/maximum current value". As described above, the "maximum current value" in the formula means a maximum value of current that the power supply 20 can output, and is obtained from the maximum output power value. The controller 4 calculates a charging end time by adding the required charging time to a current time. The controller 4 outputs the calculated charging end time to the portable terminal 30. FIG. 1 illustrates a state in which a charging end time "14:00" is displayed on a display device 30a of the portable terminal 30.

In a case where another battery electric vehicle is connected to the power supply 20 while the battery 11 is being charged, the maximum output power value that the power supply 20 can output to the battery electric vehicle 10 (battery 11) may be reduced. When the maximum output power value is reduced, the charging end time may be delayed. Therefore, the controller 4 of the charging device 2 acquires the information on the maximum output power value from the power supply 20 to recalculate the charging end time at predetermined time intervals. The controller 4 updates the charging end time displayed on the portable terminal 30.

The charging device 2 periodically acquires the information on the maximum output power value of the power supply 20 and updates the charging end time. Therefore, the charging device 2 can present an accurate charging end time to the user.

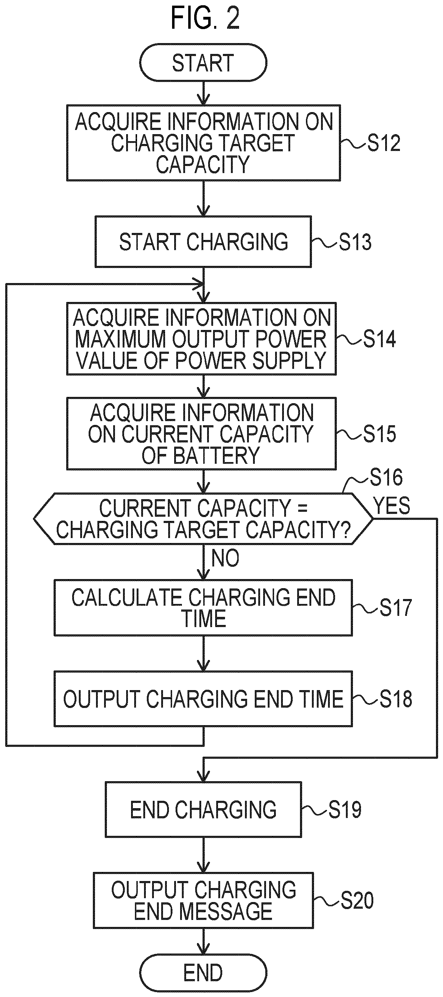

FIG. 2 is a flowchart of a charging process executed by the controller 4 of the charging device 2. The charging process will be described again with reference to FIG. 2.

Before the charging, the controller 4 acquires the information on the charging target capacity from the user (step S12). As described above, the user inputs a desired charging target capacity to the controller 4 via the portable terminal 30. The charging target capacity may be input to the controller 4 via another device, for example, an input device provided in the battery electric vehicle 10, instead of the portable terminal 30. Alternatively, in a case where the user does not input the charging target capacity, the full charge capacity of the battery 11 may be automatically set to the charging target capacity. When step S12 is ended, the controller 4 starts charging (step S13).

Next, the controller 4 communicates with the controller 21 of the power supply 20 to acquire the information on the maximum output power value of the power supply 20 (step S14). Next, the controller 4 acquires the information on the current capacity of the battery 11 (step S15). The controller 4 compares the charging target capacity with the current capacity (step S16). When the current capacity is equal to the charging target capacity, the controller 4 ends the charging, outputs the charging end message, and ends the process (step S16: YES, S19, S20). The charging end message is output to the portable terminal 30 of the user. The portable terminal 30 displays a message indicating that the charging is ended on the display device 30a.

In step S16, in a case where the current capacity is smaller than the charging target capacity, the controller 4 calculates the charging end time (step S16: NO, S17). The controller 4 outputs the calculated charging end time (step S18). As described above, an output destination of the charging end time is, for example, the portable terminal 30 of the user.

The controller 4 repeats the processes in steps S14 to S18 at predetermined time intervals. The process is ended at a point in time when the current capacity reaches the charging target capacity (step S16: YES, S19, S20). Here, in a case where the charging stand (the controller 21 of the power supply 20) periodically transmits the information on the maximum output power value to an outside, the "predetermined time interval" may be determined based on a cycle (interval) of the transmission. For example, in a case where the charging stand transmits the information on the maximum output power value to the outside every 15 minutes, the predetermined time interval may be 15 minutes. The predetermined time interval is not limited to the example, and it is desirable that the predetermined time interval is any time interval that can be set in advance.

The controller 4 updates and outputs the charging end time at the predetermined time intervals until the current capacity reaches the charging target capacity (steps S14 to S18). The charging device 2 periodically acquires the information on the maximum output power value of the power supply 20 and updates the charging end time. Therefore, the charging device 2 can present the accurate charging end time to the user.

### Second Example

The charging device according to a second example has the same hardware configuration as that of the first example, but has a different charging process. A charging device according to the second example is also referred to as the "charging device 2". The charging device 2 according to the second example receives a specified start time and a departure time together with the charging target capacity from the user. The specified start time means a time to start charging. The departure time means that the user desires to finish the charging by the time. The charging device 2 according to the second example includes a process for handling a case where the charging target capacity cannot be achieved by the departure time.

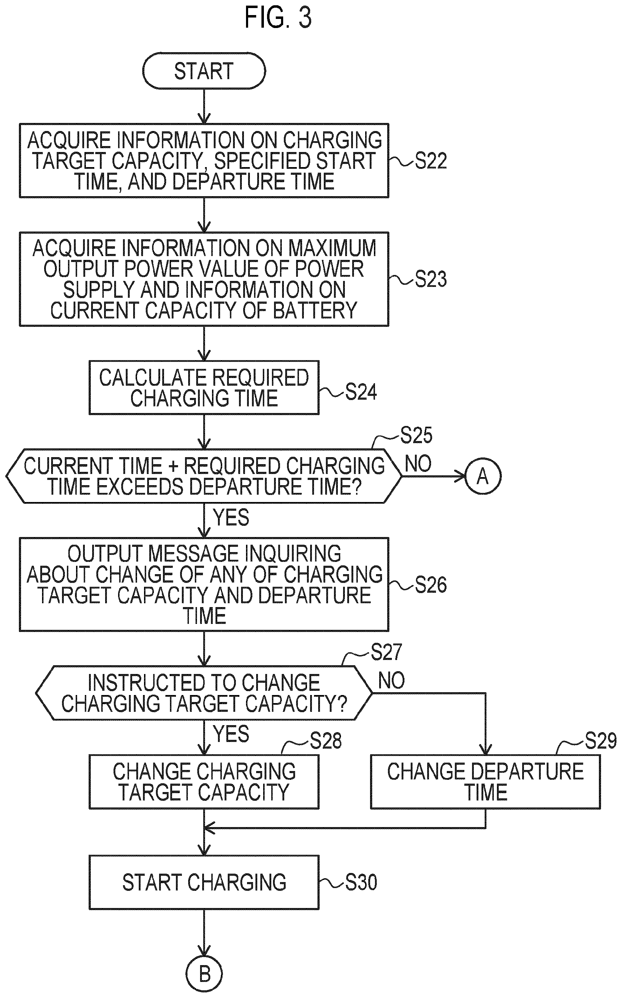

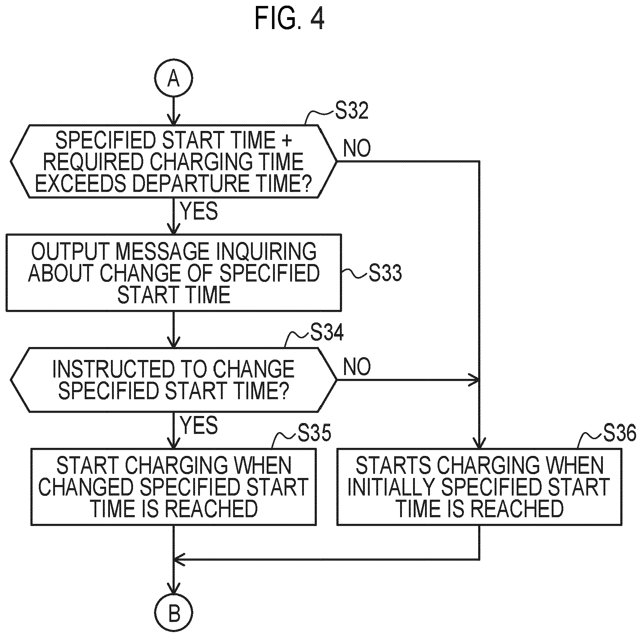

FIGS. 3 to 6 show flowcharts of the charging process according to the second example. The charging device 2 according to the second example executes processes in FIGS. 3 and 4 before the start of the charging.

The charging device 2 acquires information on the charging target capacity, the specified start time, and the departure time from the user (step S22). As described above, the user inputs the charging target capacity, the specified start time, and the departure time to the controller 4 of the charging device 2 using the portable terminal 30 or another device.

Next, the controller 4 communicates with the controller 21 of the power supply 20 to acquire the information on the maximum output power value of the power supply 20 (step S23). The controller 4 acquires the information on the current capacity of the battery 11 (step S23). The controller 4 obtains the maximum current value of the power supply 20 from the maximum output power value and the output voltage of the power supply 20, and further calculates a time needed for charging (required charging time) from the difference between the charging target capacity and the current capacity and the maximum current value (step S24), as in the case of the first example.

The controller 4 compares a time obtained by adding the required charging time to the current time with the departure time (step S25). In a case where the time obtained by adding the required charging time to the current time exceeds the departure time (step S25: YES), that is, in a case where the charging target capacity is not expected to be reached at the departure time even when the charging is started immediately, the controller 4 outputs a message inquiring about a change of any of the charging target capacity and the departure time (step S26). The inquiry message is transmitted to the portable terminal 30 of the user and is displayed on the display device 30a. The user who confirms the inquiry message is to answer which of the charging target capacity and the departure time is to be changed. The user operates the portable terminal 30 to answer with either a new charging target capacity or a new departure time.

In a case where the user desires the change of the charging target capacity, the controller 4 changes the charging target capacity acquired in step S22 to a new charging target capacity specified by the user (step S27: YES, S28). On the other hand, in a case where the user desires the change of the departure time, the controller 4 changes the departure time acquired in step S22 to a new departure time specified by the user (step S27: NO, S29). After executing the process so far, the controller 4 starts the charging (step S30).

In a case where the time obtained by adding the required charging time to the current time in step S25 does not exceed the departure time, the process of the controller 4 proceeds to S32 of FIG. 4 (step S25: NO, S32).

The controller 4 compares a time obtained by adding the required charging time to the specified start time with the departure time (step S32). In a case where the time obtained by adding the required charging time to the specified start time does not exceed the departure time, the controller 4 starts the charging when the specified start time is reached (step S32: NO, S36). On the other hand, in a case where the time obtained by adding the required charging time to the specified start time exceeds the departure time (step S32: YES), the controller 4 outputs a message inquiring about a change of the specified start time (step S33). The user answers whether or not to change the specified start time by using the portable terminal 30 (or another device). In a case where the user instructs the change of the specified start time, the controller 4 starts the charging when a changed specified start time is reached (step S34: YES, S35). In a case where the user refuses to change the specified start time, the controller 4 starts the charging when the initially specified start time is reached (step S34: NO, S36).

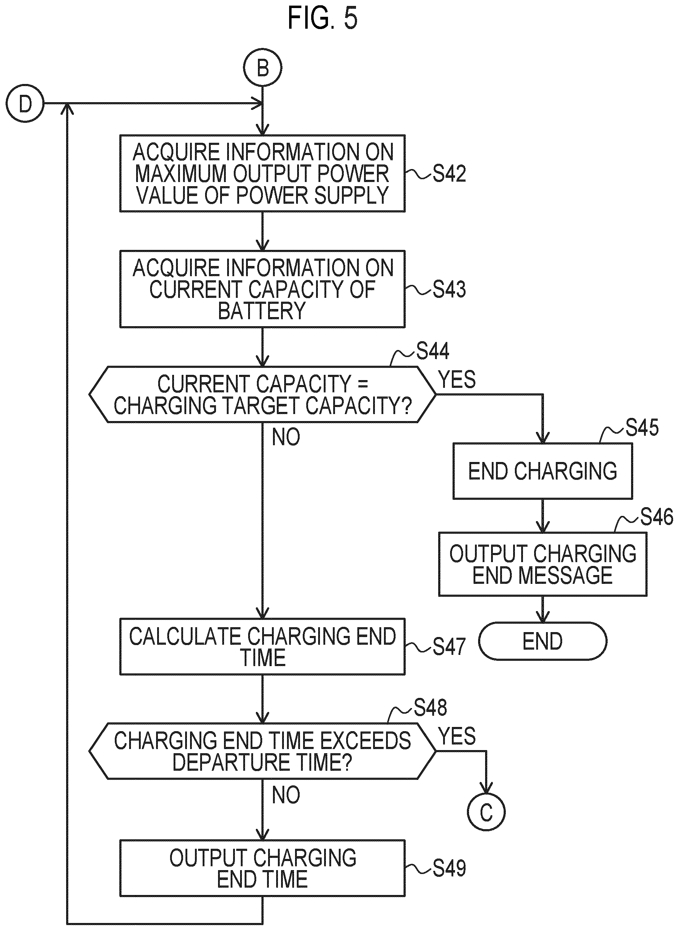

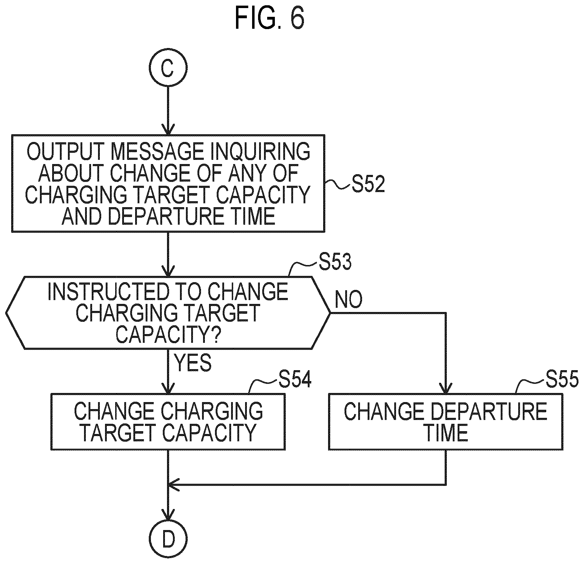

FIGS. 5 and 6 are processes of the charging device 2 after the start of the charging. The controller 4 communicates with the controller 21 of the power supply 20 to acquire the information on the maximum output power value of the power supply 20 (FIG. 5, step S42). Next, the controller 4 acquires the information on the current capacity of the battery 11 (step S43). The controller 4 compares the charging target capacity with the current capacity (step S44). When the current capacity is equal to the charging target capacity, the controller 4 ends the charging, outputs the charging end message, and ends the process (step S44: YES, S45, S46). The charging end message is output to the portable terminal 30 of the user. The portable terminal 30 displays the message indicating that the charging is ended on the display device 30a.

In step S44, in a case where the current capacity is smaller than the charging target capacity, the controller 4 calculates the charging end time (step S44: NO, S47). A procedure for calculating the charging end time is as described above. The controller 4 compares the charging end time with the departure time (step S48). In a case where the charging end time does not exceed the departure time, the controller 4 outputs the calculated charging end time (step S48: NO, S49). As described above, the output destination of the charging end time is, for example, the portable terminal 30 of the user.

The controller 4 repeats the processes in steps S42 to S49 at predetermined time intervals when the charging end time does not exceed the departure time. The process is ended at the point in time when the current capacity reaches the charging target capacity (step S44: YES, S45, S46).

In the process in step S48, in a case where the charging end time exceeds the departure time (step S48: YES), the process of the controller 4 proceeds to step S52 of FIG. 6.

In step S52, the controller 4 outputs a message inquiring about a change of any of the charging target capacity and the departure time. The inquiry message is transmitted to the portable terminal 30 of the user and is displayed on the display device 30a. The user who confirms the inquiry message is to answer which of the charging target capacity and the departure time is to be changed. The user operates the portable terminal 30 to answer with either a new charging target capacity or a new departure time.

In a case where the user desires the change of the charging target capacity, the controller 4 changes the stored charging target capacity to a new charging target capacity specified by the user (step S53: YES, S54). On the other hand, in a case where the user desires the change of the departure time, the controller 4 changes the stored departure time to a new departure time specified by the user (step S53: NO, S55). After step S54 or S55 is executed, the process of the controller 4 proceeds to step S42 of FIG. 5. The processes in step S42 and the subsequent steps is the same as described above. In a case where the process returns to step S42 via the process in FIG. 6, any of the charging target capacity and the departure time is changed.

In the charging process of the charging device 2 according to the second example, in a case where the charging target capacity cannot be achieved by the departure time input by the user, the user is prompted to change any of the charging target capacity and the departure time. The user knows that an initial plan cannot be achieved, and can change any of the charging target capacity and the departure time.

Points to consider regarding the technique described in the examples will be described. The controller 4 of the charging device 2 may display the charging end time on another display device (for example, a display device in a vehicle) instead of the display device 30a of the portable terminal 30.

Although specific examples of the present disclosure have been described above in detail, the examples are merely illustrative and are not intended to limit the scope of the claims. The technology described in the claims includes various modifications and changes of the specific examples exemplified above. The technical elements described in the present specification or the drawings exhibit technical usefulness alone or in various combinations, and are not limited to the combinations described in the claims at the time of filing. Further, the technology exemplified in the present specification or the drawings can achieve a plurality of objectives at the same time, and achieving one of the objectives has technical usefulness.

## Claims

1. A charging device (2) configured to present a time at which charging is finished when a battery (11) is charged with power supplied from a power supply (20), the charging device comprising a controller (4) configured to
acquire information on a charging target capacity of the battery (11), and
at predetermined intervals, (i) acquire information on a maximum output power value of the power supply (20) and information on a current capacity of the battery (11), (ii) calculate a charging end time at which the charging target capacity is reached from the maximum output power value and a difference between the charging target capacity and the current capacity, and (iii) output the charging end time.

2. The charging device (2) according to claim 1, wherein the controller (4) is configured to display the charging end time on a display device (30a) of a portable terminal (30).
